Europäisches Patentamt

European Patent Office

Office européen des brevets

(19)

(11) **EP 0 808 047 B1**

(12) **FASCICULE DE BREVET EUROPEEN**

(45) Date de publication et mention
de la délivrance du brevet:
**28.04.2004 Bulletin 2004/18**

(51) Int Cl.⁷: **H04L 27/227**

(21) Numéro de dépôt: **97401055.5**

(22) Date de dépôt: **12.05.1997**

(54) **Démodulateur numérique de signal modulé en phase**

Digitaler Demodulator für phasenmodulierte Signale

Digital demodulator for phase modulated signals

(84) Etats contractants désignés:
**DE GB**

(30) Priorité: **15.05.1996 FR 9606080**

(43) Date de publication de la demande:
**19.11.1997 Bulletin 1997/47**

(73) Titulaires:
- **FRANCE TELECOM**
  **75015 Paris (FR)**
- **LA POSTE**
  **92777 Boulogne Billancourt Cédex (FR)**

(72) Inventeur: **Levionnais, Philippe**
**14300 Caen (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**EP-A- 0 153 264          US-A- 5 182 760**

- **INTERNATIONAL CONFERENCE ON COMMUNICATIONS, INCLUDING SUPERCOMM TECHNICAL SESSIONS. ATLANTA, APR. 15 - 19, 1990, vol. 2 OF 4, 15 Avril 1990, INSTITUTE OF ELECTRICAL AND ELECTRONICS ENGINEERS, pages 365-369, XP000146095 TOMOKI OHSAWA: "WIDE RANGE AND SHORT TIME PULL-IN COHERENT DEMODULATION METHOD FOR PSK SIGNAL --- ACE-DEMO ---"**

**Description**

La présente invention a pour objet un démodulateur numérique de signal ayant une porteuse modulée par sauts de phase et elle trouve une application importante dans de nombreux domaines de transmission. Elle est notamment applicable à la démodulation de signaux transmis par des lignes téléphoniques et provenant d'un modem, modulés en tout ou rien, c' est-à-dire par sauts de phase de 0 ou π.

A l'heure actuelle, les démodulateurs classiques, incorporés dans les modems du commerce, traitent le signal de façon analogique. Ils comportent un ou plusieurs circuits imprimés portant des composants électroniques discrets. Le modem constitue un appareil indépendant qui s'ajoute à ceux qui encombrent déjà les ateliers et bureaux utilisant de l'informatique.

On connaît également des démodulateurs numériques, constituant des appareils séparés.

L'article de l'International Conference in Communications ICC '90, pages 365-369, par Tomoki Ohsawa décrit un démodulateur numérique de signal ayant une porteuse modulée par sauts de phase avec: un premier multiplieur d'élévation à la puissance M des échantillons successifs fournissant un signal de sortie insensible aux variations de phase du signal d'entrée, une boucle à verrouillage de phase réglée à la fréquence de la porteuse réalisant un filtrage numérique, un diviseur de fréquence par M reconstituant la porteuse à partir de la sortie de la boucle à verrouillage de phase, et un second multiplieur recevant le signal d'entrée échantillonné et le signal de sortie du diviseur.

La présente invention vise notamment à fournir un démodulateur dont les composants essentiels peuvent être implémentés en faisant appel aux ressources d'un microcalculateur existant.

Dans ce but, l'invention propose un démodulateur numérique de signal comprenant, en cascade :

- un premier multiplieur d'élévation au carré d' échantillons successifs du signal d'entrée, fournissant un signal de sortie insensible aux variations de phase du signal d'entrée,
- une boucle à verrouillage de phase réglée à la fréquence de la porteuse, réalisant un filtrage numérique programmable ayant une fonction de transfert en Z de la forme :

$$H(z) = Y(z) / X(z)$$
$$= (\prod_{i=1}^{m}) (n_{i2}z^2 + n_{i1}z + n_{i0})/(d_{i2}z^2 + d_{i1}z + d_{i0})$$

pour les polynômes d'ordre i pairs, et

$$[(p_1z + p_0) / q_1z + q_0)] H(z)$$

pour les ordres impairs,
où m est compris entre 2 et 20 et où les valeurs n, d, p et q sont des constantes,

- un diviseur de fréquence par deux, reconstituant la porteuse à partir de la sortie de la boucle, par exemple par détermination des passages à zéro et génération de créneaux à fréquence doublée,
- un second multiplieur, recevant le signal d'entrée échantillonné et le signal de sortie du diviseur, un circuit d'ajustage de phase étant placé en avant du second multiplieur sur une de ses entrées, et
- un filtre numérique passe-bas de sortie synthétisé.

Les composants définis ci-dessus peuvent. être matérialisés par des programmes implantés sur un microcalculateur ou un ordinateur serveur. Les moyens qui s'ajoutent à ceux déjà existants dans le calculateur peuvent être aisément prévus sur une carte d'acquisition insérable à un emplacement disponible dans le microcalculateur ou l'ordinateur serveur. Ces moyens à ajouter sont relativement peu importants et leur coût peut être faible.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :

- la figure 1 est un schéma synoptique du démodulateur ;
- la figure 2 est un diagramme donnant un exemple de signal d'entrée modulé et de signal de sortie démodulé.

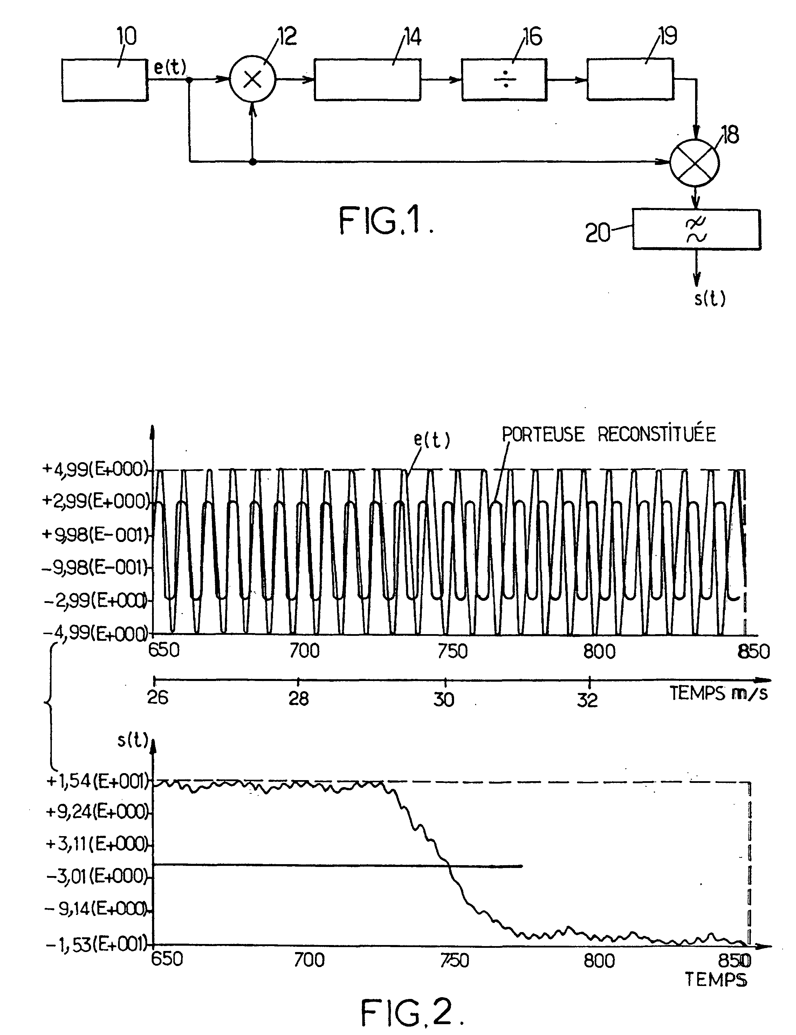

Le démodulateur dont le schéma de principe est montré en figure 1 est placé en aval d'un circuit d'acquisition 10 qui échantillonne le signal analogique entrant et le numérise. La fréquence d'échantillonnage 1/Te est au moins double de la fréquence de la porteuse. Sur la sortie du circuit 10 apparaît une séquence e(t) d'échantillons numérisés.

L'organe d'entrée du démodulateur est un multiplieur 12 élevant au carré le signal e(t). Il reçoit sur ses deux entrées les mêmes échantillons et fournit un signal de sortie égal à e(t).e(t) dont la phase est toujours égale à 0 ou $2\pi$. En effet, la phase d'entrée est 0 ou $\pi$ pour un signal modulé en tout ou rien.

Ce signal porté au carré est insensible aux variations de phase du signal d'entrée e(t).

Pour reconstituer la porteuse, le signal porté au carré est appliqué à une boucle à verrouillage de phase 14, jouant le rôle d'un filtre programmé qui restitue un signal en phase avec e(t).e(t) ou une de ses composantes.

La fonction de transfert de la boucle à verrouillage de phase 14 est choisie pour constituer un compromis entre des exigences contradictoires. Un filtre à flancs raides permet d'augmenter la sélectivité, en prenant en compte un nombre élevé d'échantillons successifs dans la fonction de transfert. Mais la boucle risque alors de manquer de stabilité et la complexité augmente. Le nombre m sera compris entre 2 et 20 et, dans la pratique, on adoptera une valeur comprise entre 2 et 10. Dans beaucoup de cas, une valeur comprise entre 2 et 4 donnera des résultats satisfaisants.

Comme il a été indiqué plus haut, l'invention présente l'intérêt de pouvoir être aisément implantée sur un microcalculateur, tel qu'un ordinateur personnel, par une programmation relativement simple. Pour cela, il suffira d'établir un programme implémentant une transformée en Z, en partant de la fonction de transfert en $\underline{s}$ désirée en utilisant la transformation bilinéaire avec prédécalage, en elle-même bien connue.

La transformée en Z doit être différente pour les polynômes d'ordre pair et pour les polynômes d'ordre impair. On peut l'écrire, pour les ordres pairs :

$$H(z) = Y(z) \ / \ X(z)$$
$$= \prod_{i=1}^{m} (n_{i2}z^2 + n_{i1}z + n_{i0})/(d_{i2}z^2 + d_{i1}z + d_{i0})$$

Les coefficients $n_0$, $n_1$, $n_2$,... et $d_0$, $d_1$, $d_2$,... sont des constantes choisies en fonction du gabarit recherché, qui dépend de la nature du signal d'entrée (et en particulier de la rapidité des transitions de phase), de la plage de capture requise pour tenir compte de la nature du signal d'entrée et du bruit.

Ces coefficients sont également choisis pour que les pôles du filtre respectent les critères de stabilité habituels.

Pour les polynômes impairs, l'ordre sera amené à une valeur impaire en multipliant par un terme de la forme :

$$(p_1 z + p_0) / (q_1 z + q_0)$$

où $p_1$, $p_0$, $q_1$ et $q_0$ sont des constantes.

On voit que le programme à implémenter ne dépasse pas la capacité de calcul en temps réel d'un ordinateur personnel de type disponible à l'heure actuelle et que le nombre d'échantillons intervenant dans le calcul peut être suffisamment faible pour que le retard dû au traitement dans la boucle à verrouillage de phase soit tolérable, même pour la transmission téléphonique de la parole.

La fréquence du signal ayant été doublée par l'élévation au carré, une division par deux est nécessaire pour retrouver la fréquence de porteuse.

Cette division peut elle aussi être effectuée par le calcul en construisant une fonction qu'on peut qualifier d'asymptotique du signal présent à l'entrée et en doublant la période de cette fonction.

La figure 1 montre dans ce but un diviseur de fréquence numérique 16 qui, en fait, sera constitué par un comparateur par rapport à zéro et un programme de calcul dans la majeure partie des cas.

Le signal modulant est restitué par un multiplieur 18 qui reçoit d'une part la sortie du diviseur de fréquence 16 et d'autre part le signal d'entrée échantillonné e(t). Ce multiplieur 18 effectue simplement une multiplication entre échantillons correspondants et peut être constitué par un programme simple.

La boucle à verrouillage de phase 14 introduit un retard qui doit être compensé. Une solution simple consiste à prévoir un déphaseur 19 entre le diviseur de fréquence 16 et le multiplieur 18. Ce déphaseur est prévu pour effectuer un décalage du nombre d'échantillons convenable et peut être une mémoire organisé en file d'attente de longueur convenable.

Le signal de sortie du multiplieur 18 comporte des composantes résiduelles à la fréquence de la porteuse et de ses harmoniques. Ces parasites peuvent être éliminés par un filtre passe-bas 20 dont la constitution peut être simple, car la fréquence du signal modulant est généralement très éloignée de la fréquence de la porteuse. Ce filtre numérique 20 peut être synthétisé sous forme logicielle par un procédé similaire à celui utilisé pour synthétiser la boucle à verrouillage de phase 14.

La figure 2 montre, à titre d'exemple, les résultats obtenus dans la démodulation d'une porteuse à 4 kHz modulé à 300 Bauds. Le graphe du haut de la figure 2 montre le signal d'entrée e(t) modulé et le signal de porteuse reconstitué par la méthode numérique, tel qu'il apparaît à la sortie du diviseur 16. Le graphe du bas montre la façon dont apparaît, à la sortie du filtre 20, le signal de sortie s(t) démodulé.

On donnera maintenant, à titre d'exemple, les caractéristiques d'un démodulateur applicable à la démodulation d'une porteuse modulée par un signal provenant d'une ligne téléphonique et reçu par un coupleur acoustique. Sur un tel signal, la rotation de phase entre 0 et $\pi$ n'est pas instantanée et la boucle à verrouillage de phase 14 doit avoir une fonction de transfert telle qu'elle puisse discriminer entre la modulation et tout effet comparable à un effet Doppler, tel que par exemple l'inertie d'un haut parleur en cas de coupleur acoustique.

La transformée en Z peut alors être de la forme :

$$H(z)=(0,004z^2-0,00993z+0,00496) /$$

$$(z^4-0,245z^3+1,92z^2-0,234z+0,913)$$

Pour synthétiser un filtre numérique réalisant cette transformée, on pourra utiliser une équation aux différences qui peut s'écrire, avec les notations classiques et en désignant $10^{-r}$ par (E-r) :

$$Y[j]=(1,0/D4)*(N4*X[j]+N3*X[j-1]+N2*X[j-2]+$$

$$N1*X[j-3]+N0*X[j-4]-D3*Y[j-1]-D2*Y[j-2]-D1*Y[j-3]$$

$$-D0*Y[j-4]) \qquad (1)$$

avec :

$$N4=0, N3=0, N2=4,96(E-3), N1=9,93(E-3), N0=4,96(E-3),$$

$$D4=1,00(E+0), D3=2,45(E-1), D2=1,92(E+0), D1=2,34(E-1),$$

$$D0=9,13(E-1) \qquad (2)$$

avec, comme conditions initiales :

$$Y[0] = Y[1 ] = Y[2] = Y[3] = 0,0 \qquad (3)$$

une valeur m=4 apparaît dans ce cas comme un compromis satisfaisant.

Le filtre de sortie 20 peut être de son côté synthétisé en utilisant l'équation aux différences suivante, permettant d'obtenir une fréquence de coupure de 4 kHz :

$$Y[j]=(1,0/D2)x(-D1xY[j-1]+N2xX[j]+N1xX[j-1])$$

avec
D2=(Te+2*T1), D1=(Te-2*T1), D0=0,0,
N2=Te, N1=Te, N0=0,0,
Te=40(E-6), T1=5,1(E-9)
et, comme conditions initiales,
Y[0]=0,0, Y[1]=0,0.

Comme on l'a indiqué plus haut, le démodulateur numérique peut comporter une carte d'acquisition assurant les fonctions d'échantillonnage et comportant, en mémoire morte programmable, des programmes d'implémentation des fonctions définies plus haut, les calculs nécessaires étant effectués par l'unité centrale de l'organe de calcul (microcalculateur, calculateur personnel ou même ordinateur d'usage général).

## Revendications

1. Démodulateur numérique de signal ayant une porteuse modulée par sauts de phase de 0 ou $\pi$ et échantillonné à une cadence au moins double de la fréquence de la porteuse, comprenant, en cascade :

   - un premier multiplieur (12) d'élévation au carré des échantillons successifs e(t), fournissant un signal de sortie insensible aux variations de phase du signal d'entrée,
   - une boucle à verrouillage de phase (14) réglée à la fréquence de la porteuse, réalisant un filtrage numérique programmable ayant une fonction de transfert en Z de la forme :

$$H(z) = Y(z) / X(z)$$
$$= (\prod_{i=1}^{m}) (n_{i2}z^2 + n_{i1}z + n_{i0}) / (d_{i2}z^2 + d_{i1}z + d_{i0})$$

   pour les polynômes d'ordre i pairs, et

$$[(p_1 z + p_0) / q_1 z + q_0)] H(z)$$

   pour les ordres impairs,

   où m est compris entre 2 et 20 et où les valeurs n, d, p et q sont des constantes,

   - un diviseur de fréquence par deux (16), reconstituant la porteuse à partir de la sortie de la boucle à verrouillage de phase,
   - un second multiplieur (18) recevant le signal d'entrée échantillonné e(t) et le signal de sortie du diviseur, un circuit d'ajustage de phase (19) étant placé en avant du second multiplieur sur une de ses entrées, et
   - un filtre numérique passe-bas (20) de sortie.

2. Démodulateur selon la revendication 1, **caractérisé en ce que** le diviseur de fréquence est apte à reconstituer la porteuse par détermination des passages à zéro et génération de créneaux à fréquence doublée.

3. Démodulateur selon la revendication 1 ou 2, **caractérisé en ce que** le filtre numérique passe-bas de sortie est synthétisé par un filtre numérique programmé.

## Claims

1. Digital demodulator for demodulating a signal having a carrier modulated by phase shifts of 0 or $\pi$ and sampled at a rate that is at least twice the frequency of the carrier, comprising, in cascade:

   a first multiplier (12) for squaring successive samples e(t) and delivering an output signal that is insensitive to variations in the phase of the input signal ;
   a phase locked loop (14) adjusted to the frequency of the carrier, and performing programmable digital filtering having a Z transfer function of the form:

$$H(z) = Y(z) / X(z)$$
$$= (\prod_{i=1}^{m})(n_{i2}z^2 + n_{i1}z + n_{i0}) / (d_{i2}z^2 + d_{i1}z + d_{i0})$$

for polynomials having orders i that are even, and

$$[(p_1 z+p0)/(q_1 z+q_0)]H(z)$$

for odd orders,

where m is an integer in the range 2 to 20, and where n, d, p, and q are constant values ;
a divide-by-two frequency divider (16) reconstituting the carrier from the output of the phase locked loop ;
a second multiplier (18) receiving the sampled input signal e(t) and the output signal from the divider, a phase adjusting circuit (19), being placed upstream from the second multiplier on one of the inputs thereof ; and, an output lowpass digital filter (20).

2. Demodulator according to claim 1, **characterized in that** the frequency divider is able to reconstitute the carrier by detecting zero crossings and by generating squarewaves at the frequency which is made double.

3. Demodulator according to claim 1, **characterized in that** the output lowpass digital filter is synthesized by a programmed digital filter.

**Patentansprüche**

1. Digitaler Demodulator für phasenmodulierte Signale mit einer durch Phasensprünge von 0 oder $\pi$ modulierten Trägerwelle und mit Probenentnahme in einem Takt, der mindestens dem Doppelten der Frequenz der Trägerwelle entspricht, wobei der Demodulator in Kaskadenanordnung Folgendes umfasst:

- einen ersten Multiplikator (12) zur Erhebung zum Quadrat der nacheinanderfolgenden Proben e(t), welcher ein Ausgangssignal bereitstellt, das gegenüber den Phasenschwankungen des Eingangssignals unempfindlich ist,

- eine auf der Frequenz der Trägerwelle geregelte Phasenverriegelungsschleife (14), welche eine digitale, programmierbare Filterung mit einer Transferfunktion in Z mit folgender Form

$$H(z) = Y(z) / X(z)$$
$$= (\prod_{i=1}^{m})(n_{12}z^2 + n_{11}z + n_{10}) / (d_{12}z^2 + d_{11}z + d_{10})$$

für die geraden Polynome der Ordnung i und

$$[(p_1 z + p_0) / q_1 z + q_0)] H(z)$$

für die ungeraden Paare aufweist, wobei m zwischen 2 und 20 liegt und die Werte n, d, p und q Konstanten sind,

- einen Frequenzteiler (16) durch zwei, welcher die Trägerwelle ausgehend vom Ausgang der Phasenverriegelungsschleife wiederherstellt,

- einen zweiten Multiplikator (18), der das Proben-Eingangssignal e(t) und das Ausgangssignal des Frequenzteilers empfängt, wobei ein Phaseneinstellungskreis (19) vor dem zweiten Multiplikator auf einem seiner Eingänge angeordnet ist, und

- einen digitalen Ausgangs-Tiefpassfilter (20).

2. Demodulator nach Anspruch 1, **dadurch gekennzeichnet, dass** der Frequenzteiler geeignet ist, durch Bestimmung der Nulldurchgänge und durch Erzeugen von Spannungsspitzen mit verdoppelter Frequenz die Trägerwelle wiederherzustellen.

3. Demodulator nach Anspruch 1 oder 2, **dadurch gekennzeichnet, dass** der digitale Ausgangs-Tiefpassfilter durch einen programmierten digitalen Filter synthetisiert wird.

FIG.1.

FIG.2.